# EUROPÄISCHE PATENTSCHRIFT

(11) **EP 1 304 485 B1**
(45) Veröffentlichungstag und Bekanntmachung des Hinweises auf die Patenterteilung: **29.03.2006**
(21) Anmeldenummer: 02405818.2
(22) Anmeldetag: 23.09.2002
(51) Int. Cl.: F04D 29/12, F16J 15/32, F04D 7/06

(54) **Wellenabdichtungsanordnung für eine Pumpe zur Förderung heisser Fluide**
Pump seal for a pump pumping hot fluids
Joint d'étanchéité pour pompe à liquide chaud

(30) Priorität: 22.10.2001 EP 01811028
(43) Veröffentlichungstag der Anmeldung: 23.04.2003
(73) Patentinhaber: SULZER PUMPEN AG, 8401 Winterthur (CH)
(72) Erfinder: Meuter, Paul, 8472 Seuzach (CH)
(74) Vertreter: Sulzer Management AG

(56) Entgegenhaltungen:
- EP-A- 0 836 040
- EP-A- 1 134 424
- DE-A- 2 344 666
- DE-A- 3 136 721
- DE-C- 19 527 781
- GB-A- 724 510
- US-A- 4 082 297
- US-A- 5 997 004
- US-B1- 6 173 962

## Beschreibung

Die Erfindung betrifft eine Wellenabdichtungsanordnung für eine Pumpe zur Förderung heisser Fluide. Die Wellenabdichtungsanordnung ist in einem Gehäuse angeordnet und umfasst eine dynamische Wellendichtung, insbesondere eine Gleitringdichtung, um eine rotierbare Welle gegenüber dem Gehäuse abzudichten, und einen Kühlring, welcher der dynamischen Wellendichtung in Richtung zum Pumpeninnenraum vorgelagert ist, und welcher die Welle in geringem Abstand umschliesst.

Zur Förderung heisser Fluide werden normalerweise Kreiselpumpen eingesetzt. Eine derartige Pumpe umfasst eine mit Laufrädern bestückte Pumpenwelle, die in einem Gehäuse rotierbar angeordnet ist, sowie dynamische Wellendichtungen, um die Welle gegen das Gehäuse abzudichten. Weiter enthalten Pumpen zur Förderung heisser Fluide Kühlstrecken, die den dynamischen Wellendichtungen in Richtung zum Pumpeninnenraum vorgelagert sind, um die Temperatur soweit herabzusetzen, dass Standard-Wellendichtungen eingesetzt werden können. Siehe z.B. EP-A-1 134 424.

In grösseren Pumpen, wie beispielsweise in Kesselspeisepumpen, findet man als Kühlstrecken meist wassergekühlte Kühlringe, welche die Welle in geringem Abstand umschliessen. Der Spalt zwischen Welle und Kühlring ist so dimensioniert, dass normalerweise keine Berührung zwischen Welle und Kühlring stattfindet. Damit ist der Spalt genügend breit, dass ein Austausch von Fluid zwischen dem Spalt und dem angrenzenden Pumpeninnenraum stattfinden kann. Solange die Welle rotiert, ist die Kühlwirkung des Kühlrings über den Umfang der Welle konstant. Steht die Welle jedoch still, kommt es zur Ausbildung einer thermischen Strömung im Spalt zwischen Welle und Kühlring, indem heisses Fluid in den oberen Teil des Spaltes steigt und abgekühltes Fluid in den unteren Teil absinkt. Dieser Effekt, der als Thermosiphonkreislauf bekannt ist, führt in Folge der ungleichmässigen Temperaturverteilung zu einer Verkrümmung der Welle. Als Folge davon nimmt die Belastung der Lagerteile, wie beispielsweise des Entlastungskolbens für die Kompensation des Axialdruckes, zu und es entstehen zusätzliche Berührungspunkte zwischen rotierenden und nichtrotierenden Teilen der Pumpe. Das Anfahren der Pumpe wird dadurch erschwert, und es kommt zu einer erhöhten Abnützung der betroffenen Pumpenteile. Um den oben beschriebenen Thermosiphonkreislauf während dem Stillstand der Pumpe zu vermeiden, sind im Kühlring und am Wellenumfang Isolationszwischenräumen vorgesehen. Am Wellenumfang werden beispielsweise sogenannte Thernnosleeves angebracht, das sind Wellenschutzhülsen mit einem Luftspalt zwischen Welle und Hülse. Die genannten lsolationszwischenräume genügen jedoch häufig nicht, um den Thermosiphonkreislauf zu unterbinden.

Der Erfindung liegt die Aufgabe zu Grunde, den erwähnten Thermosiphönkreislauf im Spalt zwischen Welle und Kühlring, welcher während dem Stillstand der Pumpe auftritt, vollständig zu unterbinden, und die damit verbundenen Nachteile zu vermeiden.

Diese Aufgabe wird erfindungsgemäss durch die im unabhängigen Anspruch 1 definierte Wellenabdichtungsanordnung gelöst.

Die erfindungsgemässe Wellenabdichtungsanordnung, welche in einem Gehäuse angeordnet ist, umfasst in einer ersten Ausführungsform eine dynamische Wellendichtung, insbesondere eine Gleitringdichtung, um eine rotierbare Welle gegenüber dem Gehäuse abzudichten, und einen Kühlring, welcher der dynamischen Wellendichtung in Richtung zum Pumpeninnenraum vorgelagert ist, und welcher die Welle in geringem Abstand umschliesst, sowie eine zusätzliche Dichtung zwischen Gehäuse und Welle und/oder zwischen Gehäuse und einem Entlastungskolben für den Axialdruck und/oder zwischen Kühlring und Welle, um die Zufuhr von heissem Fluid in den Spalt zwischen Welle und Kühlring, zu reduzieren, wobei die zusätzliche Dichtung als Bürstendichtung ausgebildet ist, die als Dichtungselemente eine Vielzahl von dicht angeordneten Fasern, Borsten und/oder Drähten umfasst, welche ringförmig verteilt und befestigt sind und mit ihren freien Enden zur abzudichtenden Oberfläche weisen.

Vorteilhafterweise sind die Fasern, Borsten und/oder Drähte der Bürstendichtung flexibel und/oder flexibel befestigt und in einem spitzen Winkel zur Wellenoberfläche angeordnet, wobei die Spitze des Winkels in Laufrichtung zeigt. Vorteilhafterweise ist die Länge der Fasern, Borsten und/oder Drähte so vorbestimmt, dass sie durch die rotierende Welle auf eine passende Länge eingeschliffen werden.

In einer bevorzugten Ausführungsvariante ist die Bürstendichtung nahe der seitlichen Begrenzung des Kühlririges, zum Pumpeninnenraum hin angeordnet. In einer weiteren bevorzugten Ausführungsform ist der Kühlring im Gehäuse integriert. In einer weiteren bevorzugten Ausführungsform ist die Welle im Bereich des Kühlrings und/oder im Bereich der Bürstendichtung mit einer Wellenschutzhülse versehen ist.

Eine Pumpe zur Förderung heisser Fluide mit einer Wellenabdichtungsanordnung gemäss der vorliegenden Erfindung ist Gegenstand von Anspruch 8. Vorteilhafterweise wird die Erfindung bei Kesselspeisepumpen angewendet, welche beispielsweise für Fluidtemperaturen von 150 bis 250°C und für Drücke von 60 bis 360 bar ausgelegt sind.

In einer Ausführungsvariante umfasst die Wellenabdichtungsanordnung für eine Pumpe zur Förderung heisser Fluide eine dynamische Wellendichtung, um eine rotierbare Welle gegenüber einem Gehäuse abzudichten, und einen Kühlring, welcher der dynamischen Wellendichtung in Richtung zum Pumpeninnenraum vorgelagert ist, und welcher die Welle in geringem Abstand umschliesst. Weiter umfasst die Wellenabdichtungsanordnung eine zusätzliche Dichtung, welche die Welle im Bereich des Kühlrings abdichtet, um die Zufuhr von heissem Fluid in den Spalt zwischen Welle und Kühlring zu reduzieren, wobei die zusätzliche Dichtung als Bürstendichtung ausgebildet ist.

Weitere vorteilhafte Ausführungsformen gehen aus den abhängigen Ansprüchen und der Zeichnung hervor.

Im Folgenden wird die Erfindung an Hand der Ausführungsbeispiele und an Hand der Zeichnung näher erläutert. Es zeigen:
- Fig. 1: einen Längsschnitt durch eine Kesselspeisepumpe;
- Fig. 2: einen Längsschnitt durch eine Wellenabdichtungsanordnung gemäss einem ersten Ausführungsbeispiel zur vorliegenden Erfindung; und
- Fig. 3: einen Querschnitt durch eine Wellenabdichtungsanordnung gemäss dem ersten Ausführungsbeispiel, wobei die Schnittebene in die Bürstendichtung gelegt wurde;
- Fig. 4: einen Querschnitt durch eine Bürstendichtung (Detailansicht).

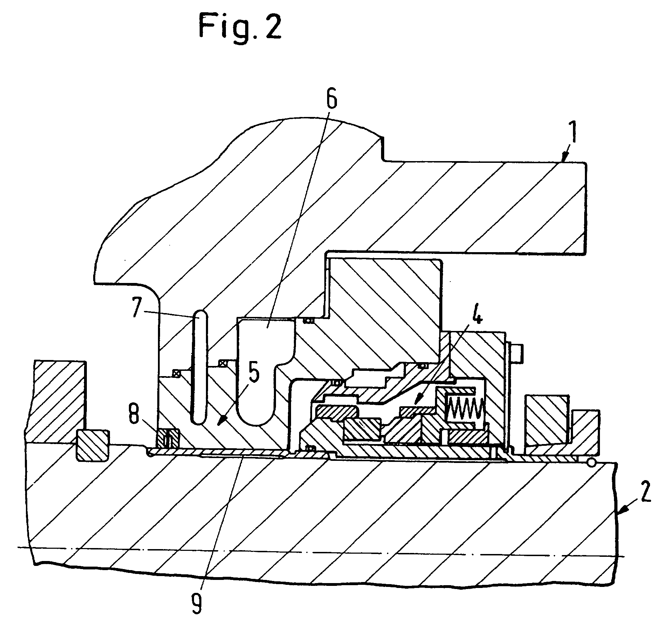

Fig. 2 zeigt einen Längsschnitt durch eine Wellenabdichtungsanordnung gemäss einem ersten Ausführungsbeispiel zur vorliegenden Erfindung. In Fig. 2 bezeichnet die Bezugsnummer 1 ein Gehäuse und die Bezugsnummer 2 eine Welle, welche drehbar im Gehäuse 1 angeordnet ist. Die hierfür notwendigen Lager sind in Fig. 2 nicht dargestellt. Die Wellenabdichtungsanordnung gemäss dem vorliegenden Ausführungsbeispiel umfasst eine dynamische Wellendichtung 4, um die Welle 2 gegenüber dem Gehäuse 1 abzudichten. Die dynamische Wellendichtung 4 kann beispielsweise als einfach- oder doppeltwirkende Gleitringdichtung, als entlastete Gleitringdichtung, als Schwimmringdichtung (Floating Seal), als Bürstendichtungsanordnung, welche mehrere einzelne Bürstendichtungen enthält, oder als feste Drossel o.ä. ausgeführt sein. Zusätzlich zur eigentlichen Wellendichtung kann eine Quenchdichtung eingesetzt werden, das ist ein von einer Sperr- oder Spülflüssigkeit durchströmter Dichtungsabschnitt, welcher beispielsweise durch einfache Radialdichtringe abgedichtet ist. Weiter umfasst die Wellenabdichtungsanordnung gemäss dem vorliegenden Ausführungsbeispiel einen Kühlring 5, welcher der dynamischen Wellendichtung 4 in Richtung zum Pumpeninnenraum, d.h. zum heissen Teil der Pumpe hin vorgelagert ist, und welcher die Welle 2 in geringem Abstand umschliesst, um die Temperatur soweit herabzusetzen, beispielsweise auf ungefähr 60°C, dass die dynamischen Wellendichtung 4 als Standarddichtung für mittlere Temperaturen ausgelegt werden kann. Im Ausführungsbeispiel ist der Kühlring 5 im Gehäuse 1 integriert und umfasst eine ringförmige, wassergekühlte Kammer 6 und einen ringförmigen Luftspalt 7 zur thermischen Isolation des Kühlrings 5. Weiter umfasst die Wellenabdichtungsanordnung gemäss dem vorliegenden Ausführungsbeispiel eine zusätzliche Dichtung 8, welche auf der heissen Seite des Kühlrings 5, beispielsweise nahe der seitlichen Begrenzung des Kühlrings 5, zum Pumpeninnenraum hin angeordnet werden kann, um die Zufuhr von heissem Fluid in den Spalt zwischen der Welle 2 und dem Kühlring 5 zu reduzieren. Die Dichtung 8 kann auch zwischen der Welle 2 und einem vorstehenden Teil des Gehäuses 1, welcher dem Kühlring vorgelagert ist, angeordnet werden oder, falls ein Entlastungskolben für den Axialdruck vorhanden ist, zwischen dem Entlastungskolben und dem Gehäuse 1. Weiter ist es möglich, mehrere Dichtungen 8 vorzusehen. In der erfindungsgemässen Wellenabdichtungsanordnung ist die zusätzliche Dichtung 8 als Bürstendichtung ausgebildet, die als Dichtungselemente eine Vielzahl von dicht angeordneten Fasern, Borsten und/oder Drähten umfasst, welche ringförmig verteilt und befestigt sind und mit ihren freien Enden zur abzudichtenden Oberfläche der Welle 2 weisen. Zweckmässigerweise ist die Welle 2 im Bereich der zusätzlichen Dichtung 8 und/oder im Bereich des Kühlrings 5 mit einer Wellenschutzhülse 9 versehen. Zur thermischen Isolation kann zwischen der Wellenschutzhülse 9 und der Welle 2 ein Luftspalt vorgesehen werden.

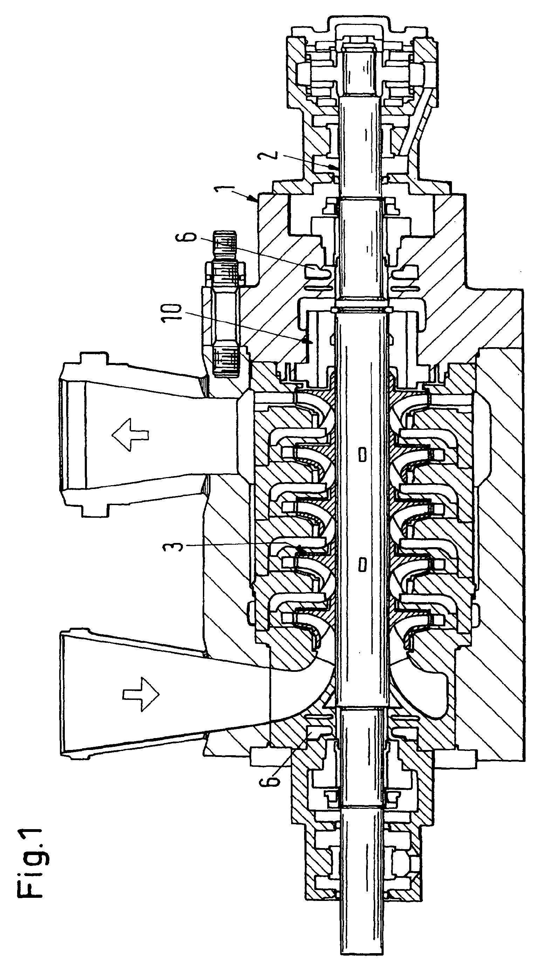

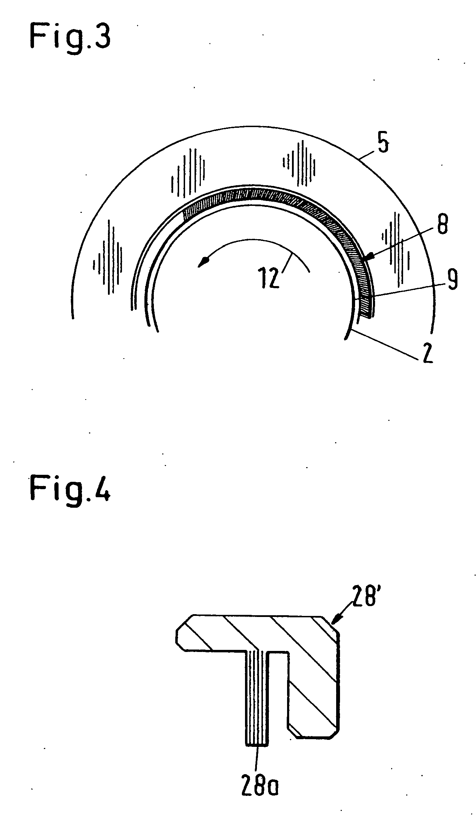

Fig. 3 zeigt einen Querschnitt durch eine Wellenabdichtungsanordnung gemäss Ausführungsbeispiel, wobei die Schnittebene in die Bürstendichtung gelegt wurde. Wie aus Fig. 3 ersichtlich, ist eine Wellenschutzhülse 9 auf einer Welle 2 angeordnet. Eine zusätzliche Dichtung 8, welche in einem Kühlring 5 eingelassen. ist, umschliesst die Wellenschutzhülse 9 derart, dass die Welle 2 gegen den Kühlring 5 abgedichtet ist. In der erfindungsgemässen Wellenabdichtungsanordnung ist die zusätzliche Dichtung 8 als Bürstendichtung ausgebildet, die als Dichtungselemente eine Vielzahl von dicht angeordneten Fasern. Borsten und/oder Drähten umfasst, welche ringförmig verteilt und befestigt sind und mit ihren freien Enden zur abzudichtenden Oberfläche weisen, d.h. im vorliegenden Ausführungsbeispiel zur Oberfläche der Wellenschutzhülse 9. Der Schnitt in Fig. 3 ist so gelegt, dass die Fasern, Borsten und/oder Drähte der Dichtung 8 sichtbar sind. Vorteilhafterweise sind die Fasern, Borsten und/oder Drähte der Bürstendichtung flexibel und/oder flexibel befestigt und in einem spitzen Winkel zur Wellenoberfläche angeordnet, wobei die Spitze des Winkels in Laufrichtung 12 der Welle 2 zeigt. Vorteilhafterweise ist die Länge der Fasern, Borsten und/oder Drähte so vorbestimmt, dass sie durch die rotierende Wellenschutzhülse 9 und/oder die Welle 2 und/oder einen in Fig. 1 eingezeichneten Entlastungskolben 10 auf eine passende Länge eingeschliffen werden.

Versuche mit Pumpen zur Förderung heisser Fluide, wie z.B. Kesselspeisepumpen, haben gezeigt, dass sich der Thermosiphonkreislauf, welcher sonst während dem Stillstand der heissen Pumpe im Spalt zwischen Welle und Kühlring auftritt, mit Hilfe der oben beschriebenen Wellenabdichtungsanordnung praktisch vollständig unterdrücken lässt. Damit werden auch die mit dem genannten Thermosiphonkreislauf verbundenen Nachteile, wie Verkrümmung der Welle im Stillstand, Anfahrprobleme und erhöhte Abnützung an den Berührungsstellen zwischen rotierenden und nichtrotierenden Teilen der Pumpe, vermieden. Der Einsatz der erfindungsgemässen Wellenabdichtungsanordnung ist eine einfache und kostengünstige Massnahme, um den genannten Thermosiphonkreislauf zu unterbinden.

Eine Detailansicht von einem Querschnitt durch eine einzelne Bürstendichtung 28' ist in Fig. 4 gezeigt. Die Bürstendichtungen 28' umfassen als Dichtungselemente eine Vielzahl von dicht angeordneten Fasern, Borsten und/oder Drähten 28a, welche ringförmig verteilt und befestigt sind und mit ihren freien Enden zur abzudichtenden Oberfläche weisen.

Bürstendichtungen eignen sich hervorragend zur Abfuhr von Wärme sowohl von der abzudichtenden Welle als auch von Fluiden innerhalb der Dichtung, falls die Fasern, Borsten und/oder Drähte der Bürstendichtung aus einem gut wärmeleitenden Material wie beispielsweise Metall bestehen. Die Fasern, Borsten und/oder Drähte bilden in diesem Fall eine grosse metallische Oberfläche, der ein kleines Fluidvolumen innerhalb der Dichtung gegenüber steht. Ein Thermosiphonkreislauf wird unter diesen Umständen praktisch unterdrückt und die mit dem Thermosiphonkreislauf verbundenen Probleme werden vermieden.

## Patentansprüche

1. Wellenabdichtungsanordnung für eine Pumpe zur Förderung heisser Fluide, welche Wellenabdichtungsanordnung in einem Gehäuse (1) angeordnet ist und eine dynamische Wellendichtung (4), insbesondere eine Gleitringdichtung umfasst, um eine rotierbare Welle (2) gegenüber dem Gehäuse (1) abzudichten, und einen Kühlring (5), welcher der dynamischen Wellendichtung (4) in Richtung zum Pumpeninnenraum vorgelagert ist, und welcher die Welle (2) in geringem Abstand umschliesst, **gekennzeichnet dadurch,**
**dass** die Wellenabdichtungsanordnung eine zusätzliche Dichtung (8) zwischen Gehäuse (1) und Welle (2) und/oder zwischen Gehäuse (1) und einem Entlastungskolben (10) für den Axialdruck und/oder zwischen Kühlring (5) und Welle (2) umfasst, um die Zufuhr von heissem Fluid in den Spalt zwischen Welle (2) und Kühlring (5) zu reduzieren, welche zusätzliche Dichtung (8) als Bürstendichtung ausgebildet ist, die als Dichtungselemente eine Vielzahl von dicht angeordneten Fasern, Borsten und/oder Drähten umfasst, welche ringförmig verteilt und befestigt sind und mit ihren freien Enden zur abzudichtenden Wellenoberfläche weisen.

2. Wellenabdichtungsanordnung nach Anspruch 1, wobei die Fasern, Borsten und/oder Drähte der Bürstendichtung (8) flexibel sind und/oder flexibel befestigt sind.

3. Wellenabdichtungsanordnung nach Anspruch 1 oder 2, wobei die Fasern, Borsten und/oder Drähte der Bürstendichtung (8) in einem spitzen Winkel zur Wellenoberfläche angeordnet sind und die Spitze des Winkels in Laufrichtung (12) der Welle (2) zeigt.

4. Wellenabdichtungsanordnung nach einem der Ansprüche 1 bis 3, wobei die Länge der Fasern, Borsten und/oder Drähte der Bürstendichtung (8) so vorbestimmt ist, dass sie durch die rotierende Welle (2) auf eine passende Länge einschleifbar sind.

5. Wellenabdichtungsanordnung nach einem der Ansprüche 1 bis 4, wobei die Bürstendichtung (8) nahe der seitlichen Begrenzung des Kühlringes (5), zum Pumpeninnenraum hin angeordnet ist.

6. Wellenabdichtungsanordnung nach einem der Ansprüche 1 bis 5, wobei der Kühlring (5) im Gehäuse (1) integriert ist.

7. Wellenabdichtungsanordnung nach einem der Ansprüche 1 bis 6, wobei die Welle (2) im Bereich des Kühlrings (5) und/oder im Bereich der Bürstendichtung (8) mit einer Wellenschutzhülse (9) versehen ist.

8. Pumpe zur Förderung heisser Fluide mit einer Wellenabdichtungsanordnung nach einem der Ansprüche 1 bis 7.

9. Pumpe nach Anspruch 8, wobei die Pumpe als Kesselspeisepumpe ausgelegt ist.

10. Pumpe nach Anspruch 8 oder 9, wobei die Pumpe für Fluidtemperaturen von 150 bis 250°C und für Drücke von 60 bis 360 bar ausgelegt ist.

## Claims

1. A shaft seal arrangement for a pump for pumping hot fluids, said shaft seal arrangement being disposed in a housing (1) and including a dynamic shaft seal (4), in particular a slide ring seal, in order to seal a rotatable shaft (2) relative to the housing (1), and a cooling ring (5), which is arranged in front of the dynamic shaft seal (4) in the direction towards the inner space of the pump and which surrounds the shaft (2) at a small spacing, **characterized in that**
the shaft seal arrangement includes an additional seal (8) between the housing (1) and the shaft (2) and/or between the housing (1) and a relief piston (10 for the axial pressure and/or between the cooling ring (5) and the shaft (2) in order to reduce the supply of hot fluid into the gap between the shaft (2) and the cooling ring (5), said additional seal (8) being formed as a brush seal which includes a plurality of density arranged fibres, bristles and/or wires as sealing elements which are distributed and secured in a ring and the free ends of which point towards the shaft surface to be sealed.

2. A shaft seal arrangement in accordance with claim 1, wherein the fibres, bristles and/or wires of the brush seal (8) are flexible and/or are flexibly secured.

3. A shaft seal arrangement in accordance with claim 1 or claim 2, wherein the fibres, bristles and/or wires of the brush seal (8) are arranged at an acute angle to the shaft surface and the tip of the angle points in the running direction (12) of the shaft (2).

4. A shaft seal arrangement in accordance with any one of the claims 1 to 3, wherein the length of the fibres, bristles and/or wires of the brush seal (8) is so predetermined that they can be ground to a matching length by the rotating shaft (2).

5. A shaft seal arrangement in accordance with any one of the claims 1 to 4, wherein the brush seal (8) is disposed close to the lateral boundary of the cooling ring (5) towards the inner space of the pump.

6. A shaft seal arrangement in accordance with any one of the claims 1 to 5, wherein the cooling ring (5) is integrated into the housing (1).

7. A shaft seal arrangement in accordance with anyone of the claims 1 to 6, wherein the shaft (2) is provided in the region of the cooling ring (5) and/or in the region of the brush seal (8) with a shaft protection sleeve (9).

8. Pump for the pumping of hot fluids having a shaft seal arrangement in accordance with any one of the claims 1 to 7.

9. Pump in accordance with claim 8, wherein the pump is designed as a boiler feed pump.

10. Pump in accordance with claim 8 or claim 9, wherein the pump is designed for fluid temperatures from 150 to 250°C and for pressures from 60 to 360 bar.

## Revendications

1. Dispositif d'étanchéité d'arbre pour une pompe pour le transport de fluides chauds, lequel est disposé dans un boîtier (1) et comprend un joint d'arbre (4) dynamique, en particulier un joint à bague de glissement, afin de rendre étanche un arbre (2) relatif vis-à-vis du boîtier (1), et une bague de refroidissement (5), laquelle est placée en amont du joint d'arbre (4) dynamique en direction de l'intérieur de la pompe, et qui entoure l'arbre (2) à faible distance, **caractérisé en ce que**
le dispositif d'étanchéité d'arbre comprend un joint (8) supplémentaire entre le boîtier (1) et l'arbre (2) et/ou entre le boîtier (1) et un piston de décharge pour la pression axiale et/ou entre la bague de refroidissement (5) et l'arbre (2), afin de réduire l'arrivée de fluide chaud dans la fente entre l'arbre (2) et la bague de refroidissement (5), lequel joint (8) supplémentaire est conçu comme un joint à brosse, qui comprend comme éléments d'étanchéité une pluralité de fibres, poils et/ou fils disposés de façon étanche, qui sont répartis en forme de bague et sont dirigés avec leurs extrémités libres vers la surface d'arbre à rendre étanche.

2. Dispositif d'étanchéité d'arbre selon la revendication 1, les fibres, poils et/ou fils du joint à brosse (8) étant flexibles et/ou étant fixés de façon flexible.

3. Dispositif d'étanchéité d'arbre selon la revendication 1 ou 2, les fibres, poils et/ou fils du joint à brosse (8) étant disposés en formant un angle aigu par rapport à la surface de l'arbre et la pointe de l'angle étant dirigée dans le sens de marche (12) de l'arbre (2).

4. Dispositif d'étanchéité d'arbre selon l'une quelconque des revendications 1 à 3, la longueur des fibres, poils et/ou fils du joint à brosse (8) étant prédéfinie de telle sorte qu'ils peuvent être rodés par l'arbre (2) rotatif jusqu'à une longueur adaptée.

5. Dispositif d'étanchéité d'arbre selon l'une quelconque des revendications 1 à 4, le joint à brosse (8) étant disposé à proximité de la délimitation latérale de la bague de refroidissement (5) en direction de l'intérieur de la pompe.

6. Dispositif d'étanchéité d'arbre selon l'une quelconque des revendications 1 à 5, la bague de refroidissement (5) étant intégrée dans le boîtier (1).

7. Dispositif d'étanchéité d'arbre selon l'une quelconque des revendications 1 à 6, l'arbre (2) étant doté d'une douille de protection d'arbre dans la zone de la bague de refroidissement (5) et/ou dans la zone du joint à brosse (8).

8. Pompe pour le transport de fluides chauds avec un dispositif d'étanchéité d'arbre selon l'une quelconque des revendications 1 à 7.

9. Pompe selon la revendication 8, la pompe étant conçue comme une pompe d'alimentation de chaudière.

10. Pompe selon la revendication 8 ou 9, la pompe étant conçue pour des températures de fluide de 150 à 250°C et pour des pressions de 60 à 360 bars.
